# EUROPÄISCHE PATENTSCHRIFT

(11) **EP 0 533 068 B1**
(45) Veröffentlichungstag und Bekanntmachung des Hinweises auf die Patenterteilung: **19.04.1995**
(21) Anmeldenummer: 92115579.2
(22) Anmeldetag: 11.09.1992
(51) Int. Cl.: C07F 7/16, C07F 7/20

(54) **Verfahren zur Abtrennung von Alkenen bei der Methylchlorsilan-Destillation**
Removal of alkenes during the distillation of methylchlorosilanes
Séparation d'alcènes pendant la distillation de méthylchlorosilanes

(30) Priorität: 16.09.1991 DE 4130790
(43) Veröffentlichungstag der Anmeldung: 24.03.1993
(73) Patentinhaber: WACKER-CHEMIE GMBH, D-81737 München (DE)
(72) Erfinder: Schinabeck, Anton, W-8263 Burghausen (DE); Haefner, Berthold, W-8263 Burghausen (DE); Pachaly, Bernd, Dr., W-8263 Burghausen (DE)

(56) Entgegenhaltungen:
- EP-A- 0 411 645
- EP-A- 0 423 948
- DE-B- 1 243 193

## Beschreibung

Die Erfindung betrifft ein verfahren zur Abtrennung von trans-3-Methylpenten bei der Methylchlorsilan-Destillation. Trans-3-Methylpenten entsteht als Nebenprodukt bei der Direktsynthese von Methylchlorsilanen.

Bei der Direktsynthese von Methylchlorsilanen aus Silicium und Methylchlorid bei 250 bis 300°C mit Kupfer-Katalysatoren entstehen neben den Methylchlorsilanen der allgemeinen Formel MeₓSiCl₄₋ₓ, wobei x die Werte 0 bis 4 hat und Me hier sowie im folgenden eine Methylgruppe bedeutet, in kleinen Mengen auch Ethylchlorsilane, verschiedene Hydrogensilane, vor allem Me_{y}HSiCl_{3-y}, wobei y die Werte 0 bis 2 hat, und Ethyldichlorsilan EtHSiCl₂. Als Verunreinigungen treten weiterhin verschiedene gerad- und verzweigtkettige Alkane und Alkene mit bis zu 9 Kohlenstoffatomen auf. Die Direktsynthese ist u.A. in W. Noll, 2. Auflage 1968, Verlag Chemie, Weinheim, Kap. 2.2, beschrieben.

Die Methylchlorsilane werden mittels Destillation aufgetrennt und von Verunreinigungen befreit. Jedoch lassen sich einige Alkene auf diese Weise aufgrund ihrer Siedepunkte oder durch Bildung azeotroper Gemische nicht vollständig entfernen. Mitgeschleppte Alkene, insbesondere verzweigte Alkene, lagern bei der Hydrolyse der Methylchlorsilane zu Zwischen- oder Endprodukten reversibel Chlorwasserstoff an. Die daraus entstehenden Chloralkane bleiben aufgrund ihres hohen Siedepunkts im Produkt und setzen bei Erhitzung des Produkts bei dessen Verwendung langsam Chlorwasserstoff frei. Dieser Chlorwasserstoff verursacht beispielsweise als Kondensationskatalysator unerwünschte Reaktionen.

Das begehrteste Zielprodukt der Direktsynthese ist Me₂SiCl₂, das durch Hydrolyse und Polykondensation zu Siliconpolymeren mit vielfältigen funktionellen Gruppen und Strukturen umgesetzt werden kann.

Ein wesentliches Qualitätsmerkmal der meisten Siliconpolymeren ist ein möglichst geringer Anteil an trifunktionellen Verunreinigungen im Polymergerüst. Die häufigsten trifunktionellen Verunreinigungen des eingesetzten Me₂SiCl₂ sind MeSiCl₃ und EtHSiCl₂.

Diese Verunreinigungen erfordern bei der zumeist kontinuierlichen Destillation des Me₂SiCl₂ Apparaturen und Anlagen mit sehr hohen Trennleistungen, da sich die Siedepunkte der Komponenten nur wenig unterscheiden.

Die betriebliche Fahrweise und die Qualitätskontrolle werden gaschromatographisch überwacht. Der Nachweis des Gehalts an EtHSiCl₂ ist allerdings sehr schwierig, da das GC-Signal auch bei optimaler Auswertung gaschromatographischer Methoden von trans-3-Methylpenten überlagert wird. Dieses Alken-Nebenprodukt der Direktsynthese ist trotz seines leicht von Me₂SiCl₂ verschiedenen Siedepunkts destillativ sehr schwer abtrennbar und reichert sich sogar in Me₂SiCl₂-Fraktionen an. In Tabelle I sind die wichtigsten Siedepunkte und Zielwerte der Konzentrationen einer hochwertigen Me₂SiCl₂-Fraktion aufgeführt. Die Konzentrationen beziehen sich im folgenden immer auf das Gewicht.

**Tabelle I**

| Silan | Siedepunkt | Zielwert der Konzentration |
|---|---|---|
| Me₂SiCl₂ | 70°C | > 99,9 % |
| MeSiCl₃ | 66°C | < 1 ppm |
| EtHSiCl₂ | 71°C | < 1 ppm |
| trans-3-Methylpenten | 68°C | < 1 ppm |

Neben dem vorstehend beschriebenen störenden Verhalten mitgeschleppter Alkene überhöht trans-3-Methylpenten die Analysenwerte der EtHSiCl₂-Gehalte. Die dadurch notwendigen hohen Rücklaufverhältnisse bei der Destillation führen zu hohem Energieverbrauch und eingeschränkter Kapazität der Anlagen.

Die DE-B 12 43 193 beschreibt ein Verfahren zur Abtrennung von Kohlenwasserstoffen aus einem Reaktionsgemisch, welches bei der Direktsynthese von Silicium mit Methylchlorid anfällt und wenigstens 10 % Dimethylchlorsilan (CH₃)₂SiHCl) vom Siedepunkt 35,4°C enthält.

Die Kohlenwasserstoffe weisen teilweise den gleichen Siedebereich wie Dimethylchlorsilan auf und sind deshalb schwer vom Dimethylchlorsilan abtrennbar. Nach einer Behandlung des Reaktionsgemisches mit Chlorwasserstoff wird durch Destillation Dimethylchlorsilan mit einem geringeren Anteil an Kohlenwasserstoffen erhalten.

Der vorliegenden Erfindung liegt die Aufgabe zugrunde, ein Verfahren bereitzustellen, mit dem man bei der Methylchlorsilan-Destillation trans-3-Methylpenten entfernen kann.

Gegenstand der Erfindung ist ein Verfahren zur Abtrennung von trans-3-Methylpenten aus einem Methylchlorsilan-Gemisch bei der Methylchlorsilan-Destillation, wobei das Methylchlorsilan-Gemisch mit der 1 bis 4 fachen zur Absättigung von trans-3-Methylpenten notwendigen stöchiometrischen Menge Chlorwasserstoff versetzt wird und das dabei entstehende 3-Chlor-3-methylpentan destillativ abgetrennt wird.

Bei dem erfindungsgemäßen Verfahren wird trans-3-Methylpenten durch Addition des gasförmig zudosierten Chlorwasserstoffs in höhersiedendes 3-Chlor-3-methylpentan überführt, das an geeigneten Stellen der Destillationsanlage ausgeschleust wird. 3-Chlor-3-methylpentan ist wesentlich einfacher destillativ abzutrennen als trans-3-Methylpenten.

Im erfindungsgemäßen Verfahren wird höchstens die 4-fache zur Absättigung von trans-3-Methylpenten notwendige stöchiometrische Menge Chlorwasserstoff zugesetzt, da überschüssiges Chlorwasserstoffgas als Abgas aus den Kolonnen der Destillationsanlage wieder entfernt werden muß. Durch zu große Mengen Chlorwasserstoff wird die Trennleistung der Destillationsanlage herabgesetzt.

Ein großer Überschuß an Chlorwasserstoff wird deshalb vorzugsweise nach der Umsetzung mit trans-3-Methylpenten aus der Destillationsanlage wieder abgetrennt, bevor das Methylchlorsilan-Gemisch in eine Destillationskolonne eingeleitet wird.

Der in die Destillationsanlage eingespeiste Chlorwasserstoff schadet üblichen Methylchlorsilan-Destillationsanlagen nicht, da diese ohnehin auf Belastung mit Chlorwasserstoffspuren ausgelegt sein müssen.

Vorzugsweise wird der Chlorwasserstoff in die Destillationsanlage so eingespeist, daß im mit Chlorwasserstoff versetzten Methylchlorsilan-Gemisch gelöstes trans-3-Methylpenten genügend Zeit hat, um vollständig zu 3-Chlor-3-methylpentan abzureagieren. Besonders vorteilhaft ist das Verweilen des Gemischs in einem Prozeßbehälter nach Zugabe des Chlorwasserstoffs und vor der Abtrennung des 3-Chlor-3-methylpentans für mindestens 5-50 h. Die Verweilzeit in den Rohren von Destillationsanlagen ist oft zu kurz und in den Kolonnen ist die Löslichkeit des Chlorwasserstoffs im Methylchlorsilan-Gemisch zu gering, um einen vollständigen Umsatz zu gewährleisten.

Durch die Chlorwasserstoffaddition wird ein Siedepunkt des entstehenden Chlor-3-methylpentans von 116,4°C bei 33 hPa erreicht. Die vorstehend aufgeführten Reinheitskriterien einer hochwertigen Me₂SiCl₂-Fraktion können mit geringerem Energieaufwand als ohne die erfindungsgemäße Abtrennung von trans-3-Methylpenten erfüllt werden.

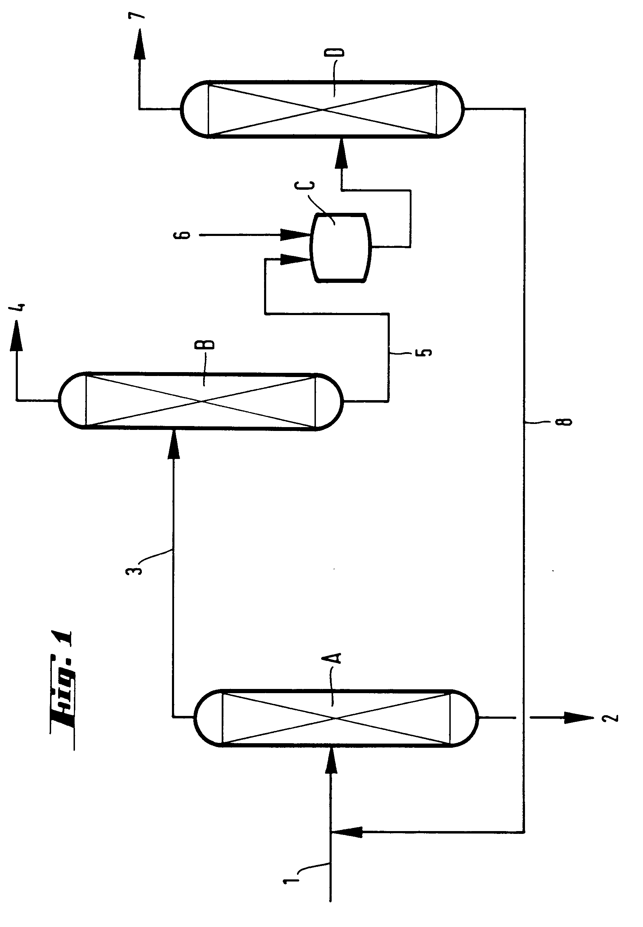

Anhand von **Fig.1** wird eine bevorzugte Ausführungsform des erfindungsgemäßen Verfahrens erläutert. Das über Leitung **1** zugeführte methylchloridfreie Rohsilan-Gemisch aus der Direktsynthese wird in Kolonne **A** so getrennt, daß am Kopf Me₂SiCl₂ und leichtersiedende Komponenten mit einem EtHSiCl₂-Gehalt von kleiner **1** ppm abgenommen werden können, im Sumpf entsprechend Me₂SiCl₂ und höhersiedende Komponenten einschließlich EtHSiCl₂. Das Kopfprodukt der Kolonne **A** geht über Leitung **3** in Kolonne **B**, das Sumpfprodukt wird über Leitung **2** zur Abtrennung der höhersiedenden Komponenten aus dem Me₂SiCl₂ abgeführt. In Kolonne **B** werden aus Me₂SiCl₂ und MeSiCl₃ die Leichtsieder über Leitung **4** entfernt. Das noch Alkene enthaltende Sumpfprodukt wird über Leitung **5** in den Prozeßbehälter **C** geführt, wo über Leitung **6** Chlorwasserstoffgas zugeführt wird. Nach einer durch das Volumen des Prozeßbehälters **C** bestimmten Verweilzeit wird das Gemisch aus Me₂SiCl₂ und MeSiCl₃, das jetzt Chloralkane enthält in Kolonne **D** geleitet. Dort werden als Kopfprodukt über Leitung **7** MeSiCl₃ und die leichter als Me₂SiCl₂ siedenden Verunreinigungsspuren entfernt. Das Sumpfprodukt enthält das rückgewonnene Me₂SiCl₂ mit höhersiedenden Chloralkanen. Dieses Sumpfprodukt wird über Leitung **8** dem Rohsilan-Gemisch in Leitung **1** zugeführt.

Ohne Chlorwasserstoffzuführung baut sich ein Kreislauf an Alkenen, auch trans-3-Methylpenten über die Leitungen **3, 5** und **8** auf. Dadurch werden auch überhöhte gaschromatographisch ermittelte Werte bezüglich EtHSiCl₂ in Kolonne **A** verursacht.

Durch Einleiten von Chlorwasserstoff über Leitung **6** in Prozeßbehälter **C** werden die Alkene zu höhersiedenden Chloralkanen umgesetzt und werden im Sumpf der Kolonne **A** über Leitung **2** ausgeschleust. Dadurch kann in Kolonne **A** das Rücklaufverhältnis erniedrigt und die Abnahme von Sumpf- und Kopfprodukt erhöht werden.

In den nachfolgenden Beispielen beziehen sich:
a) die Bezugszeichen auf **Fig. 1**;
b) der Begriff "Kohlenwasserstoffe" auf die Summe von Alkenen, Chloralkanen und Alkanen, wobei Alkane nur in Spuren vorhanden sind;
c) der Begriff "Abnahme" auf das Kopfprodukt.

### Beispiele

### Beispiel 1 (nicht erfindungsgemäß, ohne Chlorwasserstoff)

Kolonne **A** wurde bei kontinuierlicher Fahrweise so betrieben, daß bei einer Sumpfkonzentration von 300 ppm EtHSiCl₂ eine Konzentration dieser Komponente im Kopfprodukt von 1 ppm nicht überschritten wurde. Die Konzentration von EtHSiCl₂ wurde mittels Gaschromatographie (FID-Detektor) bestimmt.

Hierfür wurde bei einer Abnahme von 6,3 to/h ein Rücklaufverhältnis von 1:18 bei einer Rücklaufmenge von 140 m³/h benötigt. In der Kolonne **D** traten sowohl im Kopf- als auch im Sumpfprodukt etwa 500 ppm Kohlenwasserstoffe auf, die über Leitung **8** in Kolonne **A** teilweise im Kreis geführt werden mußten.

### Beispiel 2 (erfindungsgemäß, mit Chlorwasserstoff)

In den Prozeßbehälter **C** mit einem Volumen von 100 m³ und 50% Füllmenge wurden bei einem Durchsatz von 1,5 to/h 1 m³/h Chlorwasserstoffgas eingespeist. Die Verweilzeit des Methylchlorsilan-Gemisches im Prozeßbehälter **C** betrug somit ca. 30 h. Das Sumpfprodukt von Kolonne **B** enthielt etwa 1000 ppm Kohlenwasserstoffe. Da der überwiegende Anteil der Kohlenwasserstoffe aus trans-3-Methylpenten bestand, entsprach die Chlorwasserstoffmenge etwa dem 2,5-fachen stöchiometrischen Bedarf.
In Kolonne **D** traten danach weniger als 50 ppm Kohlenwasserstoffe im Kopfprodukt auf. Die in Kolonne **A** zurückgeführte Sumpf-Fraktion enthielt etwa 1000 ppm Chlorkohlenwasserstoffe und Kohlenwasserstoffe. In Kolonne **A** wurde bereits mit einem Rücklaufverhältnis von 1:7 bei einer Rücklaufmenge von 70 m³/h und einer Abnahme von 8 to/h die Konzentration von 1 ppm EtHSiCl₂ im Kopfprodukt erreicht.

## Patentansprüche

1. Verfahren zur Abtrennung von trans-3-Methylpenten aus einem Methylchlorsilan-Gemisch bei der Methylchlorsilan-Destillation, wobei das Methylchlorsilan-Gemisch mit der 1 bis 4 fachen zur Absättigung von trans-3-Methylpenten notwendigen stöchiometrischen Menge Chlorwasserstoff versetzt wird und das dabei entstehende 3-Chlor-3-methylpentan destillativ abgetrennt wird.

2. Verfahren nach Anspruch 1, wobei das mit Chlorwasserstoff versetzte Methylchiorsilan-Gemisch vor der Abtrennung von 3-Chlor-3-methylpentan mindestens 5-50 h in einem Prozeßbehälter verweilt.

## Claims

1. Process for separating off trans-3-methylpentene from a methylchlorosilane mixture during methylchlorosilane distillation, in which 1 to 4 times the stoichiometric amount of hydrogen chloride necessary for saturating trans-3-methylpentene is added to the methylchlorosilane mixture and the resulting 3-chloro-3-methylpentane is separated off by distillation.

2. Process according to Claim 1, in which the methylchlorosilane mixture to which hydrogen chloride has been added remains at least 5-50 h in a process tank before the 3-chloro-3-methylpentane is separated off.

## Revendications

1. Procédé de séparation de trans-3-méthylpentène à partir d'un mélange de méthylchlorosilanes lors de la distillation des méthylchlorosilanes, dans lequel on ajoute au mélange de méthylchlorosilanes 1 à 4 fois la quantité stoechiométrique de chlorure d'hydrogène nécessaire pour la saturation du trans-3-méthylpentène, et on sépare par distillation le 3-chloro-3-méthylpentane ainsi formé.

2. Procédé selon la revendication 1, dans lequel le mélange de méthylchlorosilanes additionné de chlorure d'hydrogène séjourne dans un réacteur pendant au moins 5-50 h avant la séparation du 3-chloro-3-méthylpentane.
